# EUROPEAN PATENT APPLICATION

(11) **EP 4 342 607 A1**
(43) Date of publication of application: **27.03.2024**
(21) Application number: 23190016.8
(22) Date of filing: 07.08.2023
(51) Int. Cl.: B23B 27/14

(54) **CUTTING INSERT**

(30) Priority: 26.09.2022 JP 2022153073
(71) Applicant: Tungaloy Corporation, Iwaki-shi, Fukushima 970-1144 (JP)
(72) Inventor: SASAKI, Yasutake, Iwaki-shi, Fukushima, 9701144 (JP)
(74) Representative: Vossius & Partner Patentanwälte Rechtsanwälte mbB

(57) **Abstract**

To provide a cutting insert that readily fragmentizes chips, and that has excellent durability.

At least a cutting part of a cutting insert (1) is formed of a sintered compact (10). The sintered compact includes a chip breaker (14) that is a recessed portion in which a partial region of a cutting part upper surface (13) is depressed downward. The chip breaker includes a downward inclined surface(41), an upward inclined surface(42), a jutting portion (40) that juts out along a first axial line (X1) that passes through a distant end of a cutting edge, and a stepped surface (43) that adjoins the jutting portion in a Y axis direction orthogonal to the first axial line. An upper end (40U) of the jutting portion is formed at a height (H3) of an upper stage. The stepped surface is formed at a height (H2) of an intermediate stage at a part (40L) closest to the first axial line.

## Description

### Background

### Field

The present invention relates to a cutting insert.

### Description of Related Art

Sintered compacts of which a primary component is cubic boron nitride (CBN) or polycrystalline diamond (PCD) have excellent hardness and thermal conductivity, and are suitable as a material for a cutting insert by nature. Cutting inserts, in which small pieces of sintered compacts of which the primary component is CBN or PCD are joined to an end portion of a base formed of a cemented carbide or the like, are commercially available.

CBN sintered compacts and PCD sintered compacts are difficult-to-machine materials, and providing a chip breaker of the same form as with cemented carbide is difficult. However, using laser enables the surface of a CBN sintered compact or a PCD sintered compact to be locally vaporized, whereby a chip breaker, having a form in which the surface thereof is depressed, can be formed (e.g., see WO 2005/068117).

### Summary

Thin plates such as chips do not readily break when bent as they are. However, such thin plates can be broken by even a small amount of bending if they have been curved into a form like a rain gutter. The chip breaker disclosed in WO 2005/068117 causes chips to collide with a protruding portion so as to be bent into a form like a rain gutter.

However, the higher the depth of cut becomes, the broader the chips become. With a chip breaker such as that disclosed in FIG. 2 in WO 2005/068117, there is no problem while chip control can be handled by a distal end of the protruding portion alone, but as the chips become broader and come into contact with not only the distal end of the protruding portion but the surrounding portions of the distal end, the effects of curving the chips are diminished. With a chip breaker having a shape such as that disclosed in FIG. 5 in WO 2005/068117, the area of contact with the protruding portion remains small even when the chips become broad, and accordingly the chips can be bent in a stable manner, but the distal end of the protruding portion readily becomes worn.

Accordingly, it is an object of the present invention to provide a cutting insert that readily fragmentizes chips, and that has excellent durability.

At least a cutting part of a cutting insert according to an aspect of the present invention is formed of a sintered compact. The cutting insert includes an insert upper surface, and an insert lower surface on an opposite side from the insert upper surface. The cutting part is provided on a vertex on the insert upper face that is formed in a polygonal shape. With a direction from the insert upper surface toward the insert lower surface as downward, and a direction from the insert lower surface toward the insert upper surface as upward, the sintered compact includes a cutting part upper surface that faces upward, a cutting edge formed on an outer fringe of the cutting part upper surface, and a chip breaker in which part of the cutting part upper surface is depressed downward. With a direction parallel to a first axial line that is a straight line orthogonal to a center-of-gravity axis passing through a center of gravity of the insert upper surface and a center of gravity of the insert lower surface and that passes through a distant end of the cutting edge that is farthest from the center-of-gravity axis as an X axis direction, and a direction intersecting both the X axis direction and an up-down direction as a Y axis direction, the chip breaker includes a downward inclined surface that descends the further away from the cutting edge in the X axis direction, to a height of a lower stage, an upward inclined surface that ascends the further away from the cutting edge in the X axis direction, from the height of the lower stage, a jutting portion that juts out along the first axial line in a direction from the center-of-gravity axis toward the cutting edge, and of which a jutting end faces the downward inclined surface, and a stepped surface that adjoins the jutting portion from at least one side in the Y axis direction. An upper end of the jutting portion is formed at a height of an upper stage that is higher than the height of the lower stage. The stepped surface is a surface that faces upward, and that is formed at a height of an intermediate stage that is, at a part closest to the first axial line, lower than the height of the upper stage, and higher than the height of the lower stage.

According to this aspect, the stepped surface of which the height is lower than the height of the jutting portion is formed adjoining the jutting portion, and accordingly the jutting portion is narrow in a Y axis direction as compared to a case in which the stepped surface is not formed. The area of contact with the chips is smaller at the height of the upper stage, and accordingly the chips can be more readily curved like a rain gutter and fragmentized. Also, the stepped surface is at a position higher than a bottom of the downward inclined surface, and accordingly the stepped surface has an upward inclined surface between the bottom of the downward inclined surface and itself. When the chips become broad due to the depth of cut being high, the chips can be distributed over the upward inclined surface, not just the jutting end of the jutting portion, and accordingly the jutting portion is not readily worn. A cutting insert with excellent durability can be provided.

In the above aspect, the stepped surface may be inclined ascending from the height of the intermediate stage the further away from the first axial line in the Y axis direction.

According to this aspect, the height of the stepped surface is low at parts near the jutting portion, and accordingly the area of contact with the chips is small, and the chips can be readily curved. At parts far away from the jutting portion, the area of the upward inclined surface is great, and the load is readily distributed.

In the above aspect, the jutting end may be formed as a conical surface.

According to this aspect, the jutting end comes into planar contact with the chips with its conical face, and accordingly wear occurs less readily as compared with a case of a sharp jutting end that comes into linear contact with the chips. A cutting insert with excellent durability can be provided.

According to the above aspect, the cutting edge may include a corner cutting edge that is formed in an arc shape, and a wiper cutting edge that is formed in an arc shape with a radius of curvature that is larger than that of the corner cutting edge, and that continues from one end of the corner cutting edge.

While having the wiper cutting edge improves quality of the finished surface, broad chips are generated more readily. According to this aspect, any broad chips that are generated can be efficiently fragmentized, which is particularly suitable for a cutting insert that has a wiper cutting edge.

According to the above aspect, the sintered compact may be a sintered compact of which a primary component is cubic boron nitride (CBN) or polycrystalline diamond (PCD).

According to this aspect, a chip breaker can be provided that readily fragmentizes chips and that has excellent durability, even with a sintered compact of which the primary component is CBN or PCD, which is difficult to machine.

According to the present invention, a cutting insert that readily fragmentizes chips and that has excellent durability can be provided.

### Brief Description of Drawings

FIG. 1 is a perspective view illustrating an example of a cutting insert according to an embodiment of the present invention;
FIG. 2 is a perspective view illustrating a sintered compact illustrated in FIG. 1 in an enlarged manner;
FIG. 3 is a side view illustrating the sintered compact illustrated in FIG. 1 from a Y axis direction;
FIG. 4 is a front view illustrating the sintered compact illustrated in FIG. 1 from an X axis direction;
FIG. 5 is a plan view illustrating the sintered compact illustrated in FIG. 1 from a Z axis direction;
FIG. 6 is a cross-sectional view taken along line VI-VI in FIG. 5;
FIG. 7 is a cross-sectional view taken along line VII-VII in FIG. 5;
FIG. 8 is a cross-sectional view taken along line VIII-VIII in FIG. 5;
FIG. 9 is a cross-sectional view taken along line IX-IX in FIG. 5; and
FIG. 10 is a perspective view illustrating a modification of the cutting insert illustrated in FIG. 1.

### Detailed Description

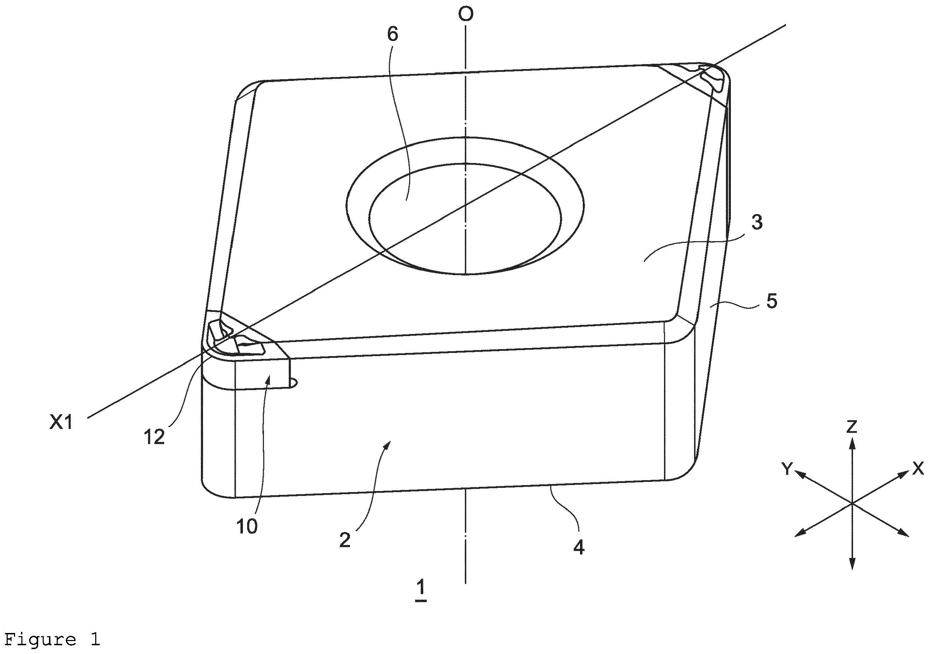

A preferred embodiment of the present invention will be described with reference to the attached drawings. Note that items denoted by like signs in the drawings have the same or equivalent configurations. Each of the configuration will be described in detail below with reference to the drawings. FIG. 1 is a perspective view illustrating an example of a cutting insert 1 according to an embodiment of the present invention. At least a cutting part of the cutting insert 1 is made of a sintered compact.

In the example that is illustrated, the cutting insert 1 is a rhombic cutting insert that is mounted to a holder to make up a lathe tool, in which small pieces of a sintered compact 10 that is harder than a base 2 are joined to each of acute-angle vertices of the base 2. The base 2 is made of a material such as a cemented carbide or the like. The sintered compact 10 is made of, for example, a sintered compact containing cubic boron nitride (CBN) or polycrystalline diamond (PCD).

PCD sintered compacts of which the primary component is PCD are obtained by sintering diamond powder with a binder that is a metal, a ceramic, or the like, under high pressure and high temperature. Such PCD sintered compacts have excellent hardness and thermal conductivity as compared to cemented carbide, and are suitable as materials for cutting tools by nature. CBN sintered compacts of which the primary component is CBN are obtained by sintering CBN powder with a binder that is a metal, a ceramic, or the like, under high pressure and high temperature. Such CBN sintered compacts have hardness and thermal conductivity close to those of PCD sintered compacts, and are suitable as materials for cutting tools by nature, such as not readily reacting with iron, and so forth.

The cutting insert 1 has an insert upper surface 3 that is formed as a polygon, an insert lower surface 4 on an opposite side from the insert upper surface 3, an insert peripheral side surface 5 that connects between the insert upper surface 3 and the insert lower surface 4, and a mounting hole 6 that passes through the insert upper surface 3 and the insert lower surface 4. In the illustrated example, the base 2 has the insert upper surface 3, the insert lower surface 4, the insert peripheral side surface 5, and the mounting hole 6. Cutting parts of the cutting insert 1 are provided at vertex portions of the insert upper surface 3 that is formed in a polygonal shape, including the vertices and the vicinities thereof.

In the illustrated example, the insert upper surface 3 is a regular polygon, in which the center and the center of gravity of the insert upper surface 3 agree, and a center axis of the mounting hole 6 and a later-described center-of-gravity axis O agree. The shape of the cutting insert 1 is not limited to the example that is illustrated, and may be another shape. For example, a sintered compact 10 that extends from the insert upper surface 3 of the base 2 to the insert lower surface 4 thereof may be joined to a cutting part of the base 2, so as to be configured such that cutting parts of both of the insert upper surface 3 and the insert lower surface 4 are usable. For example, the entirety of the cutting insert 1 may be made up of a sintered compact, rather than a part thereof. The configuration in which the portions other than the cutting parts of the cutting insert 1 are made up of the base 2, as illustrated, enables the amount of sintered compact, which is expensive, to be reduced as compared to a case in which the entirety is made up of a sintered compact.

In the following direction, a direction from the insert upper surface 3 toward the insert lower surface 4 will be referred to as "downward", and a direction from the insert lower surface 4 toward the insert upper surface 3 will be referred to as "upward". An up-down direction is indicated by a Z axis in FIG. 1. A center axis that passes through the center of gravity of the insert upper surface 3 and the center of gravity of the insert lower surface 4 is denoted by sign O in FIG. 1. A straight line that is orthogonal to the center-of-gravity axis O and that passes through distant ends of cutting edges 12 of the sintered compacts 10 will be referred to as "first axial line X1". A direction parallel to the first axial line X1 will be referred to as "X axis direction", and a direction orthogonal to both to the X axis direction and the up-down direction will be referred to as "Y axis direction". The X axis direction is indicated by an X axis in FIG. 1, and the Y axis direction is indicated by a Y axis in FIG. 1. The X axis direction may also be referred to as "front-rear direction", and the Y axis direction as "right-left direction".

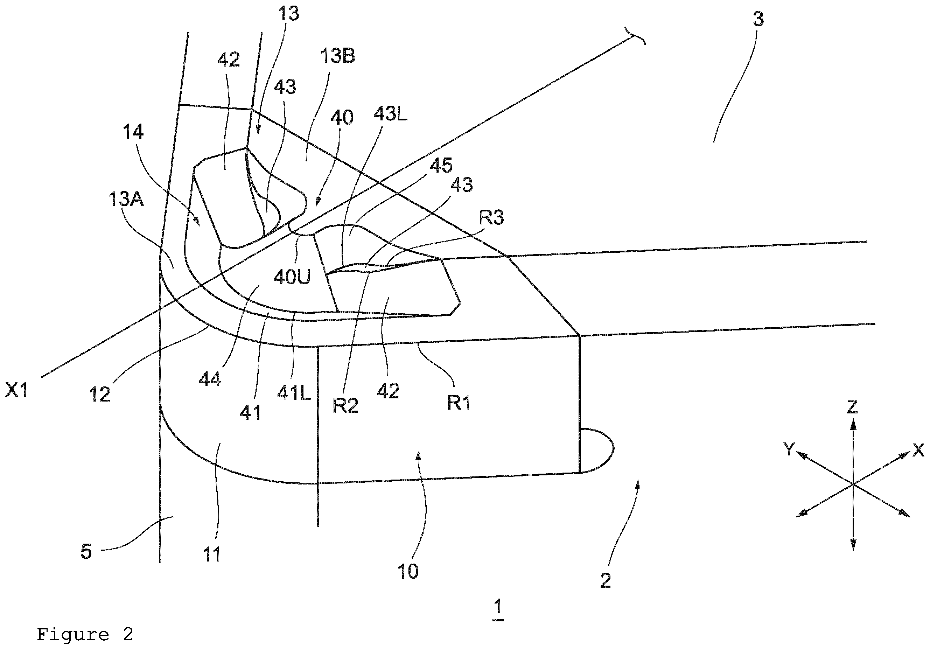

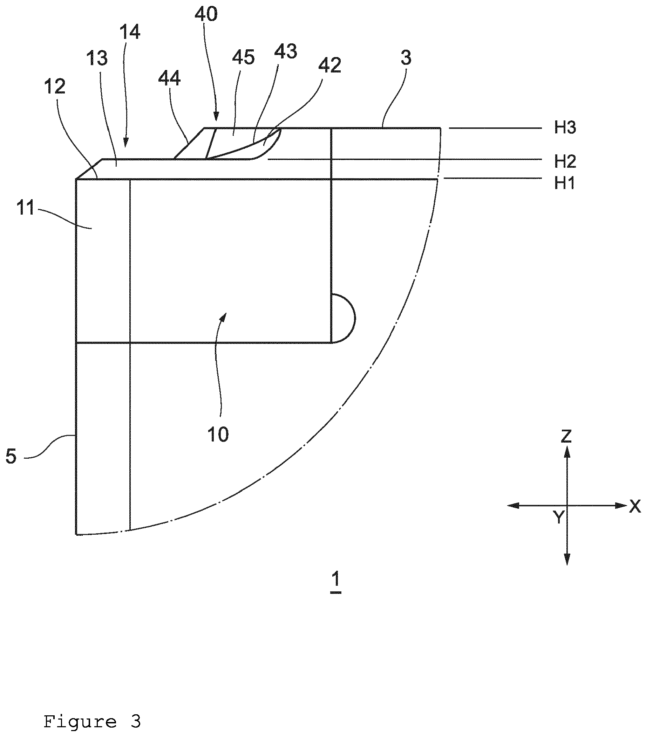

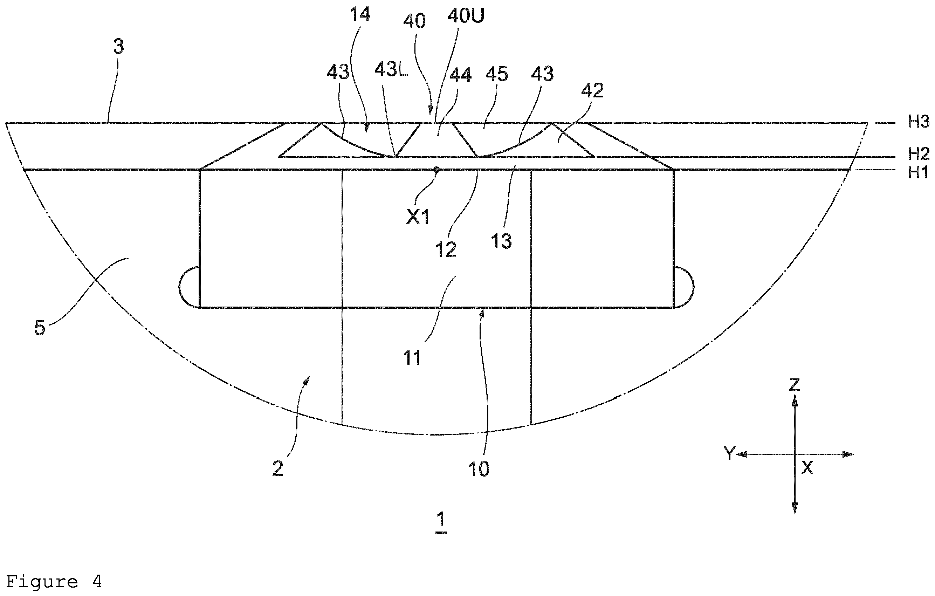

FIG. 2 is a perspective view illustrating the sintered compact 10 illustrated in FIG. 1 in an enlarged manner. FIG. 3 is a side view illustrating the sintered compact 10 illustrated in FIG. 1 from the Y axis direction. FIG. 4 is a front view illustrating the sintered compact 10 illustrated in FIG. 1 from the X axis direction. As illustrated in FIGS. 2 to 4, the sintered compact 10 has a cutting part upper surface 13 that faces upward, the cutting edge 12 formed on an outer fringe of the cutting part upper surface 13, a flank 11 that is adjacent to the cutting edge 12 from an opposite side as to the cutting part upper surface 13, and a chip breaker 14 that is a recessed portion where a partial region of the cutting part upper surface 13 is depressed downward. The outer fringe of the cutting part upper surface 13 is an intersecting edge (first intersecting line ) R1 where the cutting part upper surface 13 and the flank 11 intersect.

In the illustrated example, a land that has a negative land angle (negative land) is provided on the insert upper surface 3 and the cutting part upper surface 13 of the cutting insert 1, and the cutting part upper surface 13 includes a land 13A and an upper end surface 13B. The land 13A functions as a downward inclined surface 41 formed in the chip breaker 14 as well as a rake surface of the cutting edge 12. The cutting part of the cutting insert 1 is made up of the cutting edge 12, and the flank 11 and the rake surface that are adjacent to the cutting edge 12.

The land 13A may also be referred to as "first rake surface 13A", and the downward inclined surface 41 may also be referred to as "second rake surface 41". The land 13A and the upper end surface 13B may be formed flush, although this is omitted from illustration. In this case, the first rake surface 13A is formed as a land with a land angle of zero (flat land).

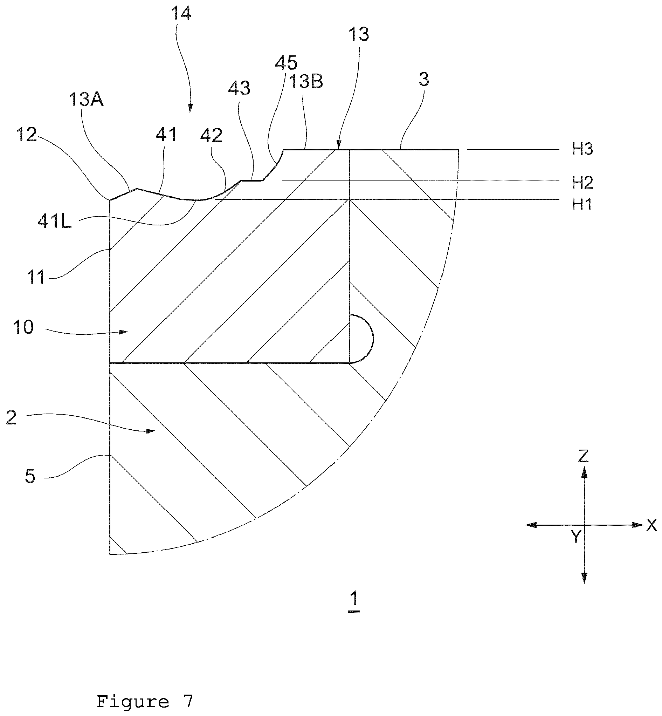

The chip breaker 14 has the downward inclined surface 41, an upward inclined surface 42, a jutting portion 40, a stepped surface 43, and a wall surface 45. The downward inclined surface 41 is formed at a position adjacent to the land 13A, and is inclined so as to descend from the height of the land 13A to a height H1 (see FIG. 7) that is a lower stage lower than the land 13A, the further away from the cutting edge 12 in the X axis direction.

The height H1 of the lower stage is the height of a bottom of the chip breaker 14, and is the lowest in the chip breaker 14. The upward inclined surface 42 is formed at a position that is farther away from the cutting edge 12 than the downward inclined surface 41 in the X axis direction, and is inclined ascending from the bottom of the chip breaker 14, i.e., from the height H1 of the lower stage, the farther away from the cutting edge 12 in the X axis direction.

The jutting portion 40 juts outward from the center-of-gravity axis O toward the cutting edge 12 along the first axial line X1. An upper end 40U of the jutting portion 40 is formed at a height H3 (see FIG. 7) of an upper stage. In the illustrated example, the height H3 of the upper stage agrees with the height of the upper end surface 13B of the cutting part upper surface 13, which is an upper end of the chip breaker 14. The height H3 of the upper stage may be lower than the upper end surface 13B, although this is not illustrated. A jutting end 44 of the jutting portion 40 is formed as a conical surface, and faces the downward inclined surface 41 that makes up the rake surface.

The stepped surface 43 adjoins the jutting portion 40 from at least one side in the Y axis direction. In the illustrated example, the stepped surface 43 is formed laterally symmetrically across the jutting portion 40, and adjoins the jutting portion 40 from both right and left sides in the Y axis direction. In other words, the stepped surface 43 is divided into two in the Y direction by the jutting portion 40. The stepped surface 43 is formed at a height H2 (see FIG. 7) of an intermediate stage, which will be described later. The wall surface 45 connects between the stepped surface 43 and the upper end surface 13B of the cutting part upper surface 13. The gradient of the wall surface 45 is greater than that of the upward inclined surface 42.

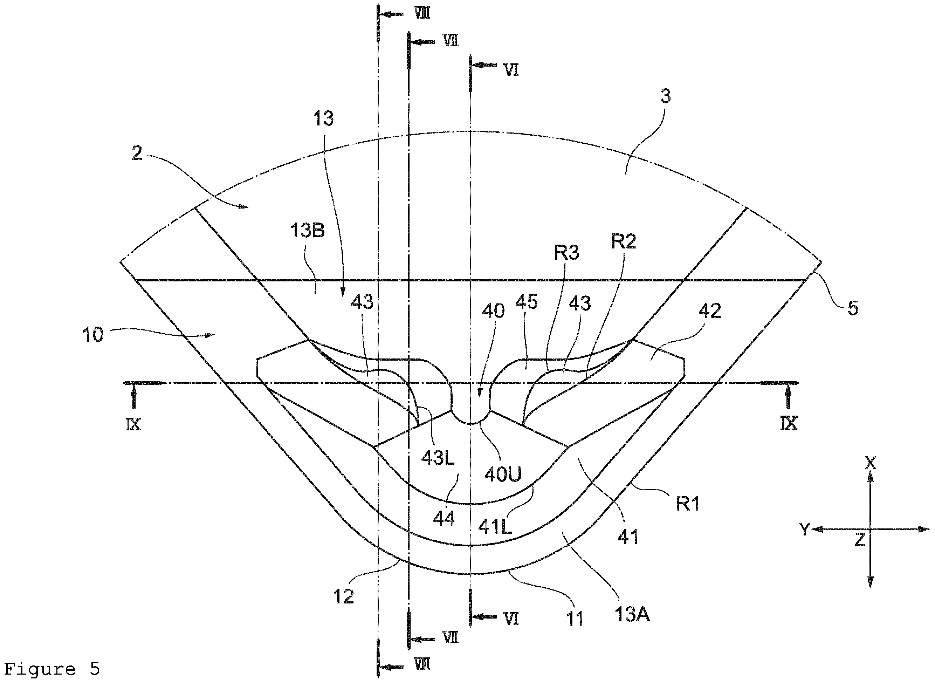

FIG. 5 is a plan view illustrating the sintered compact 10 illustrated in FIG. 1 from a Z axis direction. As illustrated in FIG. 5, an intersecting edge where the land 13A of the cutting part upper surface 13 and the flank 11 intersect is the first intersecting line R1, an intersecting edge where the stepped surface 43 and the upward inclined surface 42 intersect is a second intersecting line R2, and a trough where the stepped surface 43 and the jutting portion 40 intersect is a third intersecting line R3. The third intersecting line R3 retreats from the second intersecting line R2 in a direction away from the first intersecting line R1.

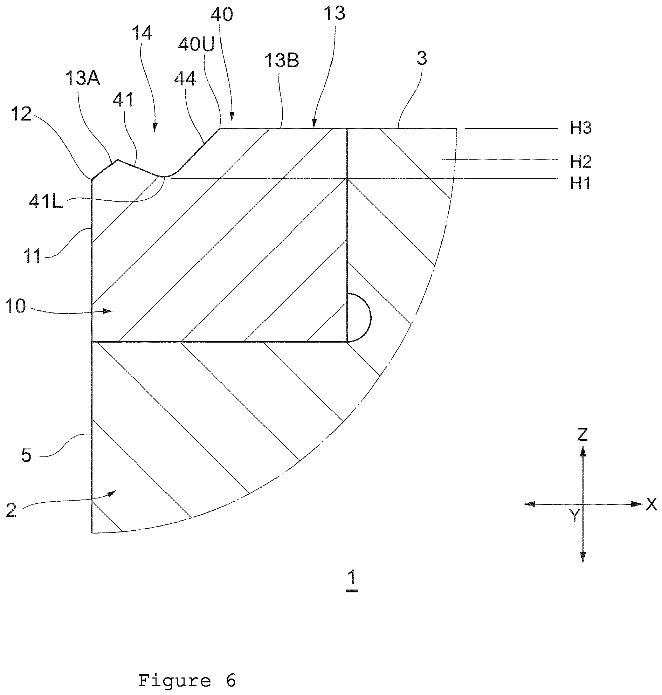

FIGS. 6 to 9 are cross-sectional views respectively taken along line VI-VI, line VII-VII, line VIII-VIII, and line IX-IX in FIG. 5. As illustrated in FIG. 6, the jutting end 44 faces the downward inclined surface 41 making up the rake surface, and chips flowing out from the downward inclined surface 41 collide with the jutting end 44. As illustrated in FIG. 7, the stepped surface 43 is a surface facing upward, and is formed at the height H2 at the intermediate stage that is lower than the height H3 of the upper stage at a portion 43L closest to the first axial line X1, and also higher than the height H1 of the lower stage.

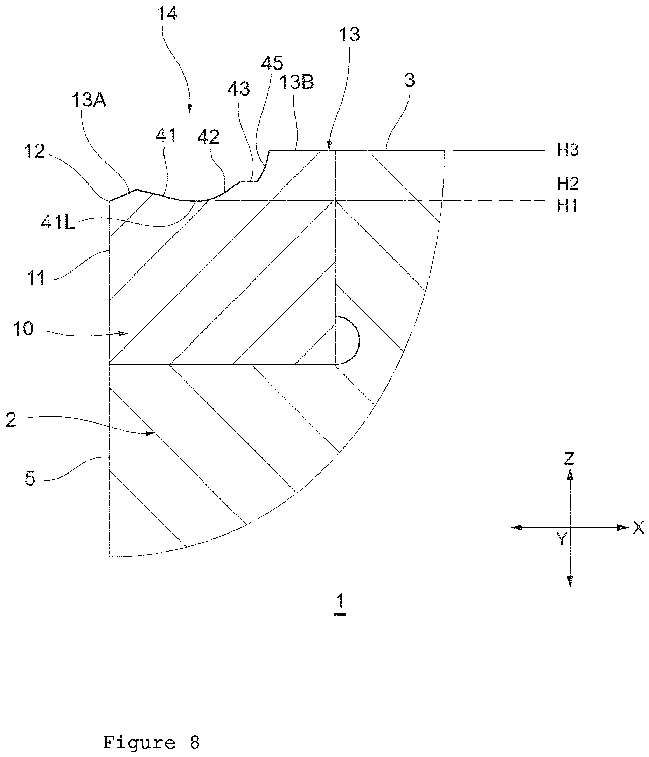

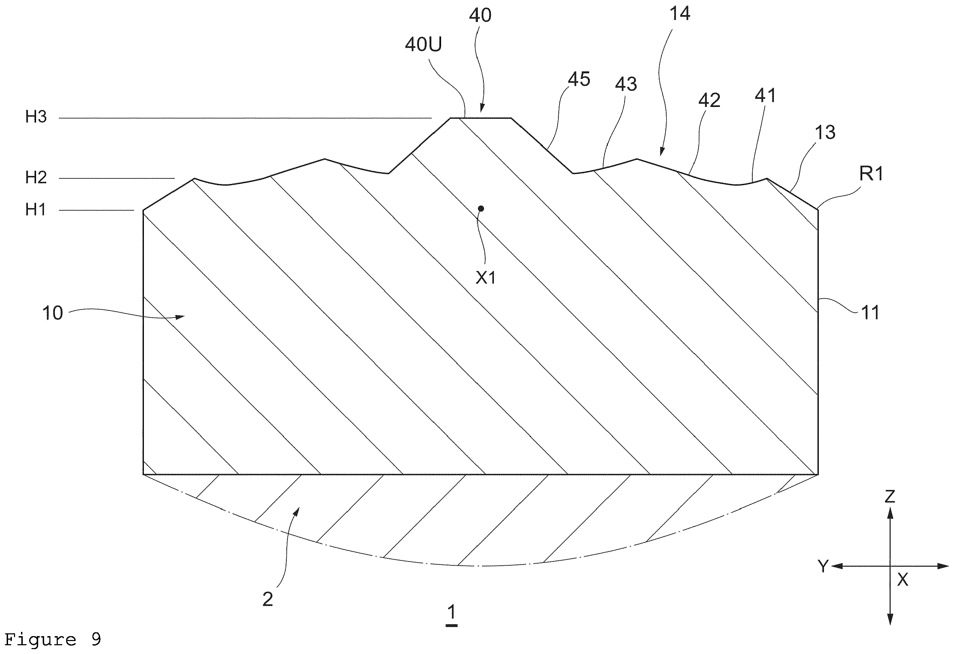

In the cutting insert 1 according to the preset invention, a lower end 43L of the stepped surface 43 is formed at the height H2 of the intermediate stage that is higher than the bottom of the chip breaker 14, and accordingly a feature thereof is that the upward inclined surface 42 is present between the bottom of the chip breaker 14 and the stepped surface 43, as illustrated in FIGS. 7 and 8. As illustrated in FIG. 9, the stepped surface 43 is inclined from the height H2 of the intermediate stage toward the height H3 of the upper stage the further away from the first axial line X1 in the Y axis direction. Accordingly, the upward inclined surface 42 is large in the up-down direction Z at a position away from the jutting portion 40.

In the cutting insert 1 according to the present embodiment that is configured as described above, the jutting portion 40 becomes narrow in the Y axis direction Y as compared to a case in which the stepped surface 43 is not formed. This facilitates curving chips like a rain gutter, and the chips can readily be fragmentized. Also, the stepped surface 43 is at the height H2 of the intermediate stage and the upward inclined surface 42 is between the stepped surface 43 and the bottom of the chip breaker 14, and accordingly, when the chips become broad due to the depth of cut being high, the load acting on the jutting end 44 of the jutting portion 40 can be distributed to the upward inclined surface 42. The jutting end 44 of the jutting portion 40 does not readily wear, and has excellent durability.

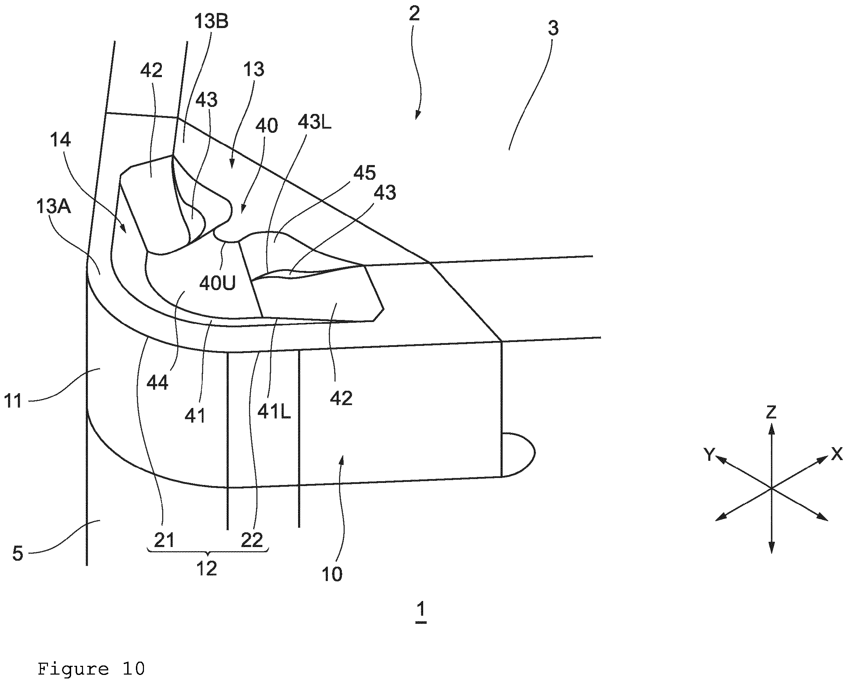

FIG. 10 is a perspective view illustrating a modification of the cutting insert illustrated in FIG. 1. As illustrated in FIG. 10, the cutting edge 12 may include a corner cutting edge 21 that is formed in an arc shape, and a wiper cutting edge 22 that is formed in an arc shape with a radius of curvature that is larger than that of the corner cutting edge 21, and that continues from one end of the corner cutting edge 21. Broad chips are readily generated when there is the wiper cutting edge 22. According to the present invention, even when broad chips are generated, these can be efficiently fragmentized, and accordingly which is particularly suitable for the cutting insert 1 that has the wiper cutting edge 22.

The embodiment described above is for facilitating understanding of the present invention, and is not for interpreting the present invention restrictively. The elements included in the present embodiment, and the layout, materials, conditions, shapes, sizes, and so forth thereof, are not limited to those exemplified, and can be changed as appropriate. Also, configurations shown in different embodiments may be partially substituted or combined with each other. For example, while a neutral type cutting insert 1 in which the insert upper surface 3 is mirror symmetrical with respect to an XZ plane passing through the first axial line X1 is illustrated, the cutting insert 1 according to the present invention may be left-handed or right-handed, and not mirror symmetrical. In this case, the stepped surface 43 may be formed only one of the right and left sides of the jutting portion 40 in the Y axis direction.

## Claims

1. A cutting insert (1) of which at least a cutting part is formed of a sintered compact (10), the cutting insert comprising:
an insert upper surface (3); and
an insert lower surface (4) on an opposite side from the insert upper surface,
wherein, with a direction from the insert upper surface toward the insert lower surface as downward, and a direction from the insert lower surface toward the insert upper surface as upward,
the sintered compact includes
a cutting part upper surface (13) that faces upward,
a cutting edge (12) formed on an outer fringe of the cutting part upper surface, and
a chip breaker (14) in which part of the cutting part upper surface is depressed downward,
with a direction parallel to a first axial line (X1) that is a straight line orthogonal to a center-of-gravity axis (0) passing through a center of gravity of the insert upper surface and a center of gravity of the insert lower surface and that passes through a distant end of the cutting edge that is farthest from the center-of-gravity axis as an X axis direction, and a direction intersecting both the X axis direction and an up-down direction as a Y axis direction,
the chip breaker includes
a downward inclined surface (41) that descends the further away from the cutting edge in the X axis direction, to a height (H1) of a lower stage,
an upward inclined surface (42) that ascends the further away from the cutting edge in the X axis direction, from the height of the lower stage,
a jutting portion (40) that juts out along the first axial line in a direction from the center-of-gravity axis toward the cutting edge, and of which a jutting end faces the downward inclined surface, and
a stepped surface (43) that adjoins the jutting portion from at least one side in the Y axis direction,
an upper end (40U) of the jutting portion is formed at a height (H3) of an upper stage that is higher than the height of the lower stage, and
the stepped surface is a surface that faces upward, and that is formed at a height (H2) of an intermediate stage that is, at a part (43L) closest to the first axial line, lower than the height of the upper stage, and higher than the height of the lower stage.

2. The cutting insert according to claim 1, wherein the stepped surface is inclined ascending from the height of the intermediate stage the further away from the first axial line in the Y axis direction.

3. The cutting insert according to claim 1 or 2, wherein the jutting end is formed as a conical surface.

4. The cutting insert according to any one of claims 1 to 3, wherein
the cutting edge includes
a corner cutting edge (21) that is formed in an arc shape, and
a wiper cutting edge (22) that is formed in an arc shape with a radius of curvature that is larger than that of the corner cutting edge, and that continues from one end of the corner cutting edge.

5. The cutting insert according to any one of claims 1 to 4, wherein the sintered compact is a sintered compact of which a primary component is cubic boron nitride (CBN) or polycrystalline diamond (PCD).
